# EUROPEAN PATENT APPLICATION

(11) **EP 3 706 011 A1**
(43) Date of publication of application: **09.09.2020**
(21) Application number: 19160674.8
(22) Date of filing: 05.03.2019
(51) Int. Cl.: G06F 16/21, G06F 16/23, G06F 16/27, G06F 16/14, G06F 16/31, G06F 16/13

(54) **COMPUTER IMPLEMENTED METHOD AND PROCESSING DEVICE FOR PROCESSING MAINTENANCE INFORMATION IN A DISTRIBUTED DATABASE SYSTEM USING A STORAGE CLIENT UNIT**

(71) Applicant: Siemens Aktiengesellschaft, 80333 München (DE)
(72) Inventor: Katrych, Sergii, 81737 München (DE); Pfeuffer, Evelyn, 81673 München (DE); Radulescu Kobler, Mihai, 5122 Ach (AT)

(57) **Abstract**

The invention relates to a computer implemented method 10 and a processing device 100 for processing maintenance information in a distributed database system 20. In a first step S1 a task 51 from an agent 50 is received by a storage client unit 110, wherein the received task 51 comprises a maintenance operation type and a maintenance operation type dependent maintenance information. The client unit 110 comprises a storage application programming interface STO-API, linking a first database 30 of said distributed database system 20 to the storage client unit 110 and a standard application programming interface STA-API, linking a second distributed database 40 of said distributed database system 20 to the storage client unit 110. In a further step S2 a maintenance operation according to the operation type dependent maintenance information is at least performed in the first database 30 or in at least the first database and the second distributed database 40 of said distributed database system 20 on the basis of the maintenance operation type. In a further step S3 a reference is returned by the storage client unit 110 to the agent 50 depending on the performed maintenance operation. The returned reference is a reference to the maintenance information within the first database 30 of said distributed database system 20.

Due to the present invention, blockchain solutions can be used for scenarios where data deleting and altering functionality is required.

## Description

The invention relates to a computer implemented method and processing device for processing maintenance information in a distributed database system.

The technology of blockchains or "Distributed Ledgers" is currently an intensively discussed technology, which can be realized, in particular, as a distributed database system. In addition to applications for decentralized payment systems (e.g. Bitcoin), new applications are being developed in the financial industry. In particular, transactions between companies can be realized without an intermediary or clearing house, protected against manipulation. This enables new business models without a trustworthy arbiter, reduces transaction costs, and new digital services can be offered flexibly without having to set up a special set up infrastructure and trusted relationships. A transaction record or transaction protected by a blockchain includes program code, for instance, which can also be referred to as a "smart contract".

In connection with the invention, under the term a "distributed database system" that can also be referred to as a distributed database, can be understood a distributed database, a blockchain, a distributed ledger, a distributed storage system, a distributed ledger technology (DLT) based system (DLTS), an audit-proof database system, a cloud, a cloud service, a blockchain in a cloud or a peer-to-peer database. Also, different implementations of a blockchain or DLTS can be used, such as a blockchain or DLTS that can be implemented using a Directed Acyclic Graph (DAG), a cryptographic puzzle, a hash graph, or a combination of the above implementation variants. Different consensus algorithms can also be implemented. This can be for instance a consensus procedure using a cryptographic puzzle, Gossip about Gossip, virtual voting or a combination of the mentioned procedures (e.g. Gossip about Gossip combined with virtual voting). For instance, if a blockchain is used, it can be implemented by means of a Bitcoin-based implementation or an Ethereum-based implementation.

A "distributed database system" can also be understood, for instance, as a distributed database system of which at least some nodes and/or devices and/or infrastructure are realized by a cloud. For example, the corresponding components are realized as nodes/devices in the cloud (e.g. as virtual nodes in a virtual machine). This can be done for instance by using VM-Ware (trademarks), Amazon Web Services (trademarks) or Microsoft Azure (trademarks). Due to the high flexibility of the implementation variants described above, partial aspects of the implementation variants mentioned can also be combined with each other, e.g. by using a hash graph as a block chain, whereby the block chain itself can also be blockless.

The blockchain is a growing list of records, called blocks or data blocks, which are linked using cryptography. Each data block contains, for instance, a cryptographic hash of the previous data block in the blockchain, a timestamp, and transaction data. By the design of the blockchain, a blockchain is resistant to modification of the transaction data.

The blockchain is an open, distributed ledger that can record transactions between, for instance, two parties efficiently and in a verifiable and permanent way. Transactions data once recorded in any given data block cannot be deleted or altered retroactively without alteration of all subsequent blocks, which requires consensus of the network majority. Due to that subsequent transactions are built on previous transactions and confirm these as correct by proving knowledge of the previous transactions. This makes it impossible to manipulate or erase the existence or content of previous transactions without destroying all subsequent transactions at the same time.

Although blockchain records are not unalterable, blockchains are considered secure by design.

In a lot of real-life scenario, it can be necessary to be able to delete or to alter data, in particular personal data, but without using, for instance, a blockchain to secure the data. Even if the blockchain technology may fit a lot of real-life scenarios where user data is involved, according to the German law named DSGVO "Datenschutz Grundverordnung" it currently cannot be used because of it append-only nature. This reduces the blockchain solution applicability. For instance, personal data such as name, day of birth, place and the like should be erasable if desired by the data owner.

One of the most common ways of data removal is to "mark" the One of the most common ways of data removal is to "mark" the involved data as deleted and to hide the data from the user or business through implementation. In this way the data may be not query-able over, for instance, by a business API (application programming interface) but the data are still present in the system, in particular, in the blockchain.

One of the major disadvantages for this approach is that the data are hidden but not deleted. In this way, for instance, developers are still able to bypass the API and will get access to personal data that was supposed to be deleted.

A further common approach for deletion of data is to segregate user data across many different chains which can be joined (in technical jargon they are interoperable). This enables total privacy and the ability to be forgotten. However, such a solution increases the effort for management and/or operation and in result the data are still available, even if in a private and not-accessible blockchain solution.

Accordingly, it is an object of the present invention to provide a deleting and/or altering functionality for certain data stored in a blockchain.

This object is achieved according to a first aspect of the present invention by a computer implemented method for processing maintenance information in a distributed database comprising the features of claim 1.

The invention provides according to the first aspect a computer implemented method for processing maintenance information in a distributed database system comprising the steps of:
Receiving by a storage client unit a task from an agent, the storage client unit comprising a storage application programming interface, STO-API, linking a first database of said distributed database system to the storage client unit and a standard application programming interface, STA-API, linking a second distributed database of said distributed database system to the storage client unit, wherein the received task comprises a maintenance operation type and a maintenance operation type dependent maintenance information,
Performing a maintenance operation according to the operation type dependent maintenance information at least in the first database or at least in the first database and the second distributed database of said distributed database system on the basis of the maintenance operation type, and
Returning by the storage client unit a reference to the agent depending on the performed maintenance operation, wherein the returned reference is a reference to the maintenance information within the first database of said distributed database system.

In connection with the invention, "computer implemented" can be understood to mean, for instance, an implementation of the procedure in which, in particular, a processor executes at least one method step of the method.

Further a maintenance information comprises, for instance, certain information in written or phonetic form, data, digital data, analogue data, and the like.

Further a maintenance operation type comprises operations to process maintenance information in a digital environment, e.g. computer, databases and the like. The operation includes storing, removing, updating, copying, replacing of maintenance information and/or the like.

In connection with the invention, "first database" can be understood to mean, for instance, a memory unit or a memory module and/or the like, that is configured to store information and data, for instance a hard disk drive (HDD) or a flash memory or a random-access memory (RAM) and the like. The memory may be storing a database.

With the method or system according to the present invention it is possible to provide a blockchain component able to provide storing functionality. The storing functionality according to the present invention provides the basis for further deleting and updating functionalities in a blockchain. The blockchain component may be provided as a reusable piece of software. The component is generic and can be applied to any blockchain. Every second generation of blockchain supports at least one programming language, for instance, Ethereum supports Solidity, Neo supports Solidity and Java supports Kotlin. The present invention can be applied to any kind of blockchain solution and does not depend on a certain implementation of the blockchain.

An advantage of the method and device for processing device according to the present invention is that it is possible to use a blockchain solution for scenarios where data deletion is involved. Therefore, it is possible to convert any blockchain solution in a full DSGVO compliant way. Personal data as wished by the data owner can be completely deleted if desired by the data owner, which fulfills the technical requirements of the DSGVO. Further the data entries (personal data, reference to the personal data) are scoped separated and user specific. Further a time/period specific scope can be introduced.

Furthermore, the present invention provides a functionality to separate concerns. Maintenance information whose integrity has to be secured can be separately stored in a distributed database without being conform to the regulations according to the DSGVO. Data, in particular, personal data can be removed. The present invention provides a solution for automated execution of the required regulations. Therefore, the blockchain technology used in the present invention is applied in a regulation conform way. The blockchain technology specific barriers to fulfil the DSVGO, such as no modification of data stored in the blockchain, are bypassed.

In a possible embodiment of the method according to the first aspect of the present invention the operation type dependent maintenance information of the received task is encrypted.

In this way, advantageously, only authorized parties have access to the maintenance information and those who are not authorized cannot access to the maintenance information.

For instance, this can be achieved by using the distributed database system to provide or transmit or send corresponding data/transactions. This is preferably achieved by a combination of the various (cryptographic) checksums, in which these interact synergistically, for instance, to improve the security or cryptographic security of the transaction data. In other words, "security protected" in connection with the invention can also be understood as "cryptographically protected" and/or "manipulation protected", whereby "manipulation protected" can also be described as "integrity protected".

In a further possible embodiment of the method according to the first aspect of the present invention the reference comprises a random hash reference.

Under a "reference", for instance, a data block reference, a data checksum, a node checksum, a transaction checksum, a concatenation checksum or the like, can be understood according to the present invention a cryptographic checksum or a cryptographic hash or hash value which is formed or calculated in particular by means of a cryptographic hash function over a data record and/or data and/or one or more of the transactions and/or a partial area of a data block (e.g. the block header of a block of a block chain or data block header of a data block of the distributed database system or only a part of the transactions of a data block).

In particular, a checksum can be a checksum(s) or hash value(s) of a hash tree (e.g. Merkle tree, Patricia tree). Furthermore, it can also be a digital signature or a cryptographic message authentication code. By means of the checksums, for instance, cryptographic protection/manipulation protection for the transactions and the data (records) stored therein can be implemented on different levels of the database system. For instance, if a high level of security is required, the checksums are generated and checked at transaction levels. If less security is required, the checksums are generated and checked at block level (for instance, for the entire data block or only for parts of the data blocks and/or part of the transactions).

In connection with the invention, a "data block checksum" can be understood as a checksum that is calculated, for instance, for part or all of the transactions of a data block. A node can then, for instance, check/establish the integrity/authenticity of the corresponding part of a data block using the data block checksum. In addition, or alternatively, the data block checksum can also have been formed using transactions of a preceding data block/predecessor data block of the data block.

The data block checksum can also be implemented using a hash tree, such as a Merkle tree or a Patricia tree, where the data block checksum is the root checksum of the Merkle tree or a Patricia tree or a binary hash tree. In particular, transactions are hedged using further checksums from the Merkle tree or Patricia tree (e.g. using the transaction checksums), whereby in particular the other checksums are sheets in the Merkle tree or Patricia tree. The data block checksum can thus, for instance, secure the transactions by forming the root checksum from the other checksums. The data block checksum can be calculated especially for transactions of a certain data block of the data blocks.

In particular, such a data block checksum can be included in a subsequent data block of the particular data block in order to link this subsequent data block with its preceding data blocks, for instance, and thus make the integrity of the distributed database system verifiable. In this way, the data block checksum can, for instance, assume the function of the concatenation checksum or be included in the concatenation checksum. The header of a data block (for instance, a new data block or the data block for which the data block checksum was formed) can include the data block checksum.

The term "transaction checksum" can be used in connection with the invention to refer to a checksum that is formed in particular from a transaction in a data block. In addition, a calculation of a data block checksum for a corresponding data block can be accelerated, since, for instance, transaction checksums that have already been calculated can be used as leaves of a Merkle tree.

In connection with the invention, a "concatenation checksum" can be understood as a checksum which, in particular, specifies or references a respective data block of the distributed database system to the preceding data block of the distributed database system. For this purpose, a corresponding concatenation checksum is formed for the corresponding preceding data block.

It can be used a transaction checksum or the data block checksum of a data block (that is, an existing data block of the distributed database system) as a concatenation checksum to concatenate a new data block with an (existing) data block of the distributed database system. However, it is also possible, for instance, for a checksum to be formed over a header of the preceding data block or over the entire preceding data blocks and used as a concatenation checksum. This can, for instance, also be calculated for several or all previous data blocks.

It is also possible, for instance, to calculate the concatenation checksum using the header of a data block and the data block checksum. However, a data block in the distributed database system preferably contains a concatenation checksum that was calculated for a preceding data block of the data block, and in particular the data block directly preceding it, or that refers to this data block. It is also possible, for instance, that a corresponding concatenation checksum is formed for only part of the corresponding data block (for instance, the preceding data block). This can be used, for instance, to create a data block that includes an integrity-protected part and an unprotected part. This could be used, for instance, to create a data block whose integrity-protected part is unchangeable and whose unprotected part can also be changed later. Integrity-protected means in particular that a change of integrity-protected data can be determined by means of a checksum.

Advantageously, the reference may include a location indication (e.g. an address of a file server and where the corresponding data can be found on the file server; or an address of another distributed database containing the data). The corresponding data could then, for instance, also be provided in another transaction of another data block of the distributed database system (for instance, if the corresponding data and the corresponding checksums are contained in different data blocks). It is also possible, for instance, that this data is provided via another communication channel (for example, via another database and/or a cryptographically secured communication channel). This is particularly advantageous in order to keep the data size of the block chain or the distributed database system as small as possible. Further it is advantageous in order to delete or alter the data without damaging the integrity of the blockchain.

In possible embodiment of the method according to the first aspect of the present invention the method further comprises the step of storing by the storage client unit the reference in the second distributed database of said distributed database system on the basis of the store operation.

Advantageously, the agent may choose to store the reference in a blockchain solution where data integrity is required. Further, by storing only the reference in the blockchain solution, the requirements of the DSGVO are fulfilled. Further, by storing the reference and maintenance information not required to be removeable in the blockchain solution, the requirements of the DSGVO are fulfilled.

In a still further possible embodiment of the method according to the first aspect of the present invention the second distributed database is a blockchain and comprises data blocks.

In a still further possible embodiment of the method according to the first aspect of the present invention the data blocks of the second distributed database are interlinked with each other by a cryptographic hash function.

In connection with the invention, "interlinking of data blocks of a distributed database system" can be understood to mean, for instance, that data blocks each contain one piece of information (e.g., concatenation checksum) that refers to or references another data block or several other data blocks of the distributed database system.

The blockchain comprising interlinked blocks provides data integrity.

In a still further possible embodiment of the method according to the first aspect of the present invention the maintenance operation type indicated by the received task comprises storing maintenance information in the first database of said distributed database system.

Advantageously, the present invention can be performed to store maintenance information in a first database by adding a reference for the stored maintenance information in blockchain of the distributed database system.

In a still further possible embodiment of the method according to the first aspect of the present invention the maintenance operation type indicated by the received task comprises removing maintenance information from the first database of said distributed database system.

Advantageously, the present invention can be performed to remove maintenance information from the first database without damaging the integrity of the blockchain.

In a still further possible embodiment of the method according to the first aspect of the present invention the maintenance operation type indicated by the received task comprises updating maintenance information within the first database of said distributed database system.

Advantageously, the present invention can be performed to update respectively to alter stored information in the first database without damaging the integrity of the blockchain.

In a still further possible embodiment of the method according to the first aspect of the present invention the maintenance operation comprises a store operation to store the maintenance information in the first database by the STO-API and the reference in the second distributed database by the STA-API of the store client unit or store maintenance information in the first database by the STO-API and maintenance information and the reference in the second distributed database by the STA-API of the storage client unit.

In a still further possible embodiment of the method according to the first aspect of the present invention the maintenance operation comprises a remove operation to remove maintenance information from the first database.

Advantageously, if an agent requires data in the blockchain to be removed, it would not be possible to remove the unique reference from the blockchain. But the agent is able to make the reference stored in the blockchain invalid by removing the content of the maintenance information stored in the first database that the reference refers to. Therefore, the reference stored in the blockchain cannot be used to deduce the maintenance information. A reference that points to a removed maintenance information is not a valid reference.

In a still further possible embodiment of the method according to the first aspect of the present invention the maintenance operation comprises an update operation to replace a maintenance information stored in the first database by encapsulating the reference for the maintenance information previously stored with an updated maintenance information.

Advantageously, if an agent requires data in the blockchain to be updated, it would not be possible to update the reference by replacing the reference pointing to a content of a maintenance information stored in the first database. But the agent is able to replace the content of a maintenance information stored in the first database with content of an updated maintenance information. The reference in the first database and in the blockchain remains the same but referring to the content of the updated maintenance information.

In a still further possible embodiment of the method according to the first aspect of the present invention the remove operation invalidates the reference of the maintenance information in the first data base so that the reference stored in the second distributed database points to a removed maintenance information.

The reference stored in the second distributed database is invalid and cannot be used to deduce maintenance information. Therefore, the maintenance information is not available or removed from the blockchain.

In a still further possible embodiment of the method according to the first aspect of the present invention the method further comprises the step of removing by the storage client unit the maintenance information in the first database of said distributed database system on the basis of the remove operation.

Advantageously, if an agent requires data in the blockchain to be removed, it would not be possible to remove the unique reference form the blockchain. But the agent is able to make the reference stored in the blockchain invalid by removing the content of the maintenance information stored in the first database where the reference refers to. Therefore, the reference stored in the blockchain cannot be used to deduce the maintenance information. A reference that points to a removed maintenance information is not a valid reference.

In a still further possible embodiment of the method according to the first aspect of the present invention the method further comprises the step of updating by the storage client unit the maintenance information in the first database of said distributed database system by encapsulating the reference for the maintenance information previously stored with an updated maintenance information on the basis of the update operation.

Advantageously, if an agent requires data in the blockchain to be updated, it would not be possible to update the reference by replacing the reference pointing to a content of a maintenance information stored in the first database. But the agent is able to replace the content of a maintenance information stored in the first database with content of an updated maintenance information. The reference in the first database and in the blockchain remains the same but referring to the content of the updated maintenance information.

The invention further provides according to a second aspect a processing device for processing maintenance information in a distributed database system comprising the features of claim 8.

The invention further provides according to a second aspect a processing device for processing maintenance information in a distributed database system,
said processing device comprising:
a storage client unit configured to receive a task from an agent, the storage client unit comprising a storage application programming interface, STO-API, linking a first database of said distributed database system to the storage client unit and a standard application programming unit, STA_API, linking a second distributed database of said distributed database system to the storage client unit, wherein the received task comprises a maintenance operation type and a maintenance operation type dependent maintenance information,
the storage client unit is further configured to perform a maintenance operation according to the operation type dependent maintenance information in the first database or in the first database and the second distributed database of said distributed database system on the basis of the maintenance operation type,
the storage client unit is further configured to return a reference to the agent depending on the performed maintenance operation, wherein the returned reference is a reference to the maintenance information within the first database of said distributed database system.

In a possible embodiment of the processing device according to the second aspect of the present invention the storage client unit is further configured to store the reference in the second distributed database of said distributed database system on the basis of the store operation.

In a further possible embodiment of the processing device according to the second aspect of the present invention the second distributed database is a blockchain and comprises data blocks. The data blocks are interlinked with each other by a cryptographic hash function.

In a further possible embodiment of the processing device according to the second aspect of the present invention the maintenance operation type indicated by the received task comprises a storing maintenance information in the first database or storing maintenance information in the first database and in the second distributed database.

In a further possible embodiment of the processing device according to the second aspect of the present invention the maintenance operation type indicated by the received task comprises a removing maintenance information from the first database.

In a further possible embodiment of the processing device according to the second aspect of the present invention the maintenance operation type indicated by the received task comprises an updating maintenance information in the first database of said distributed database system.

In a further possible embodiment of the processing device according to the second aspect of the present invention the maintenance operation comprises a store operation to store the maintenance information in the first database by the STO-API and/or in the second distributed database by the STA-API of the storage client unit.

In a further possible embodiment of the processing device according to the second aspect of the present invention the maintenance operation comprises a remove operation to remove maintenance information within the first database.

In a further possible embodiment of the processing device according to the second aspect of the present invention the maintenance operation comprises an update operation to replace a maintenance information stored in the first database by encapsulating the reference for the maintenance information previously stored with an updated maintenance information.

In a further possible embodiment of the processing device according to the second aspect of the present invention the remove operation invalidates the reference of the maintenance information in the first data base so that the reference stored in the second distributed database points to a removed maintenance information.

The invention further provides according to a third aspect a non-transitory computer-readable medium comprising the features of claim 14.

The invention further provides according to a third aspect a non-transitory computer-readable medium encoded with executable instructions that, when executed, cause a processing device to process the method according to the claims 1 to 7.

In the following possible embodiments of the different aspects of the present invention are described in more detail with reference to the enclosed figures.
- Fig. 1: shows a schematic diagram of a specific example for illustrating the operation of a method and processing device for processing maintenance information in a distributed database system;
- Fig. 2: shows a flowchart of a possible exemplary embodiment of a method for processing maintenance information in a distributed database system;
- Fig. 3: shows a block diagram of a possible exemplary embodiment of a processing device for processing maintenance information in a distributed database system;
- Fig. 4: shows a block diagram of a possible exemplary embodiment of a non-transitory computer-readable medium.

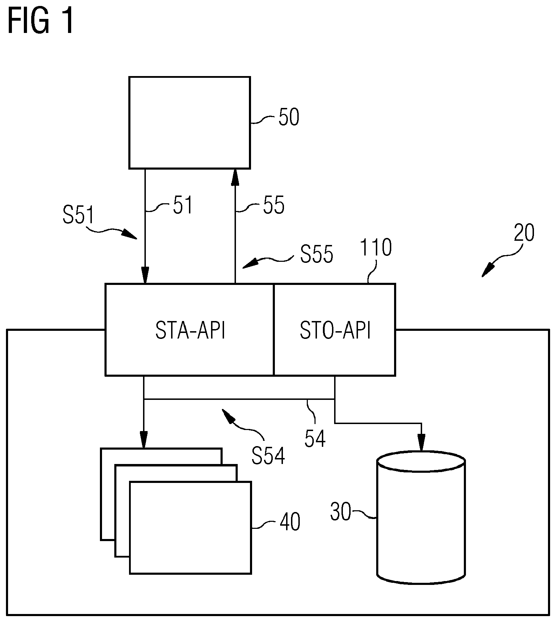

Fig. 1 shows schematically a specific example illustrating the operation of the method and processing device according to the present invention. In the illustrated exemplary embodiment, an agent 50 provides S51 a task 51 to the storage client unit 110. In an embodiment the agent 50 can include a technical component, module, computer, software component and the like providing maintenance information to the storage client unit 110.

In an alternative embodiment, the agent 50 can be a human user, for instance, a developer providing maintenance information to the storage client unit 110.

The task 51 comprises a maintenance operation type and a maintenance operation type dependent maintenance information. The maintenance operation type comprises, for instance, a store operation for storing maintenance information in a first database 30 of the distributed database system 20, a remove operation for removing maintenance information from the first database 30 of the distributed database system 20, and an update operation for updating maintenance information in the first database 30 of the distributed database system 20.

The distributed database system 20 further comprises a second distributed database 40, for instance, a blockchain. The access to the second distributed database 40 is implemented over the storage client unit 110.

The storage client unit 110 comprises a standard application programming interface (API) STA-API to be able to interact with the second distributed database 40. Therefore, the storage client unit 110 comprising the STA-API is able to provide access to blockchains using common APIs. The STA-API is exchangeable, respectively adaptable to each common blockchain solution. Therefore, the present invention can be used with all existing storing systems using a blockchain solution.

The storage client unit 110 comprises an additional application programming interface STO-API (Storage-API) that provides extra functionality able to provide storing, removing, and updating maintenance information functionality. The storage client unit 110 provides removing and updating functionality by wrapping the common API for accessing a blockchain and the first database 30 behind a common purposed API in the storage client unit 110.

The first database 30 connected to the storage client unit 110 is used to store and retrieve maintenance information and the second distributed database 40 refers to the stored maintenance information via the reference, for instance, a hash-reference. The first database 30 allows to remove maintenance information referred in the blockchain.

Moreover, even if the reference to the removed maintenance information still exists in the blockchain, that reference may be invalid because the maintenance information in the first database 30 is removed. Further, the first database 30 allows to update maintenance information referred in the blockchain. The content of the maintenance information is removed from the first database 30 and the reference of the previous removed content refers to the new content added.

According to the provided task 51, comprising a store operation, the storage client unit 110 receives a storing maintenance information. The storage client unit 110 comprises the STO-API linking the first database 30 of said distributed database system 20 to the storage client unit 110 and the STA-API linking the second distributed database 30 of said distributed database system 20 to the storage client unit 110. Therefore, the storage client unit 110 interacts with the second distributed database 40 and with the first database 30.

As a result of the maintenance operation, in particular, the store operation, a reference, for instance, a hash reference 54, is created S54 referring to the maintenance information stored. The maintenance information to be stored may be encapsulated as it is or it may be encrypted. The reference 54 is stored in the second distributed database 40 and the maintenance information is stored in the first database 30. The reference 54 stored in the second distributed database 40 guarantees that the maintenance information cannot be manipulated. The first database 30 must guarantee the integrity of the stored maintenance information. The reference 54 is not stored in a centralized way, each node for the reference 54 (or new reference) may have its own storage.

The reference is random generated and cannot be used to track back the stored maintenance information. The reference generation is not related to the maintenance information to be stored. The storage client unit 110 observes the store operation and extracts the unique reference and provides the reference to the agent 50 for e.g. further processing.

In an alternative embodiment if the agent 50 chooses to store maintenance information in the first database 30 and also in the second distributed database 40, the maintenance operation comprises a store operation to store the maintenance information in the first database 30 by the STO-API of the storage client unit 110 as well as a store operation to store the maintenance information and the reference in the second distributed database 40 by the STA-API of the storage client unit 110. The agent 50 may decide which maintenance information shall be stored in which database 30, 40 to fulfill the regulations of the DSGVO. The first database 30 may be used to store maintenance information, which can be removed or updated if required. The second distributed database 40 may be used to store further maintenance information, which are not required to be removeable. The reference and the maintenance information are not stored centralized, each node for the reference and the maintenance information may have its own storage.

In connection with the invention, "insertion into the distributed database" and the like can be understood, for instance, such that in particular a transaction or the transactions or a data block with its transactions is transferred to one or more nodes of a distributed database. For instance, if these transactions are successfully validated (e.g. by the node(s)), these transactions are chained as a new data block with at least one existing data block of the distributed database. For this purpose, the corresponding transactions are stored in a new data block.

In particular, this validation and/or chaining can be performed by a trusted node (e.g. a mining node, a block chain oracle, or a block chain platform). In particular, a block chain platform can be understood as a block chain as a service, as suggested in particular by Microsoft or IBM. In particular, a trusted node and/or a node can each store a node checksum (e.g. a digital signature) in a data block (e.g. in those data blocks which they validate and generate and which are then concatenated) in order to enable identifiability of the creator of the data block and/or enable identifiability of the node. This node checksum specifies, for instance, which node has concatenated the corresponding data block with at least one other data block of the distributed database system.

In connection with the invention, the term "transaction" or "transactions" can be understood, for instance, as a smart contract, a data structure or a transaction data record, which in each case comprises one of the transactions or several transactions. In connection with the invention, the term "transaction" or "transactions" may also include, for instance, the data of a transaction of a data block of a blockchain. In particular, a transaction can include a program code that realizes a Smart Contract. For instance, in connection with the invention, a transaction can also be understood as a tax transaction and/or confirmation transaction. Alternatively, a transaction can be a data structure that stores data (for instance, the control commands and/or contract data and/or other data such as video data, user data, measurement data, and the like).

In particular, "storage of transactions in data blocks", "storage of transactions" can be understood as direct storage or indirect storage. Direct storage can be understood, for instance, such that the corresponding data block (of the distributed database) or the corresponding transaction of the distributed database) comprises the respective data. Indirect storage can be understood to mean, for instance, that the corresponding data block or transaction contains a checksum and optionally an additional data record (e.g. a reference or an indication of a storage location) for corresponding data and that the corresponding data is therefore not stored directly in the data block (or transaction).

In some embodiments, or variations of, or additions to previous embodiments, the maintenance operation type provided S51 with the task 51 by the agent 50 comprises a remove operation for removing maintenance information from the first database 30 of the distributed database system 20. Further the task 51 comprises the maintenance operation type dependent maintenance information.

If the agent 50 chooses to remove previous stored information, then the agent 50 interacts with the first database 30 of the distributed database system 20 over the STO-API causing the maintenance information to be removed from the first database 30 of the distributed database system 20. After removing the maintenance information from the first database 30 of the distributed database system 20, the reference stored in the second distributed database 40 of the distributed database system 20 will points in this way to a removed maintenance information. This behavior can be interpreted as the maintenance information being not available. The interaction with the first database 30 of the distributed database system 20 has to be implemented in transactional way.

According to the provided task 51 comprising a remove operation, the storage client unit 110 receives a reference referring to the maintenance information in the first database 30 to be deleted. The remove operation uses the functionality provided by the STO-API that allows the agent 50 to interact with the first database 30 of the distributed database system 20. The content of the maintenance information for the given reference is removed. After removing the maintenance information from the first database 30, the reference 54 stored in the second distributed database 40 refers to a content that is not available in the first database 30 of the distributed database system 20. The reference 54 stored in the distributed database 40 of the distributed database system 20 may remain in the blockchain, because the reference 54 has no relation to the content of the original maintenance information stored in the first database 30 of the distributed database system 20. The reference 54 in the second distributed database 40 of the distributed database system points to a removed content. The storage client unit 110 provides S55, for instance, a feedback 55 to the agent 50 indicating successful removing of the maintenance information in the first database 30 of the distributed database system 20 with the provided reference 54.

In some embodiments, or variations of, or additions to previous embodiments, the maintenance operation type provided S51 with the task 51 by the agent 50 comprises an update operation for updating maintenance information within the first database 30 of the distributed database system 20. Further the task 51 comprises the maintenance operation type dependent maintenance information.

If the agent 50 chooses to update previous stored information, then the agent 50 interacts with the first database 30 over the STO-API causing the maintenance information to be updated in the first database 30.

According to the provided task comprising an update operation, the storage client unit 110 receives a reference referring to the maintenance information in the first database 30 to be updated and the new content for the maintenance information to be updated. The update operation uses the functionality provided by the STO-API that allows the agent 50 to interact with the first database 30 of the distributed database system 20 via the storage driver unit 110.

The content of the previous stored maintenance information for the given reference is replaced by the new content.

After updating the maintenance information in the first database 30 of the distributed database system 20, the reference stored in the second distributed database 40 of the distributed database system 20 refers to the new content. The storage client unit 110 provides optionally a feedback 55 to the agent 50 indicating successful updating of the maintenance information in the first database 30 of the distributed database system with the provided reference.

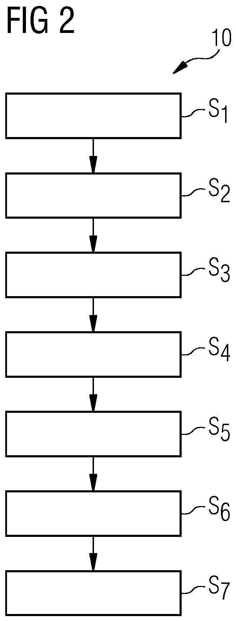

Fig. 2 shows a flowchart of a possible exemplary embodiment of a method 10 for processing maintenance information in a distributed database system.

The method comprises in the illustrated exemplary embodiment several main steps. In a first step S1, at least one task 51 from an agent 50 is received by a storage client unit 110. The storage client unit 110 comprises a storage application programming interface, STO-API, linking a first database 30 of said distributed database system 20 to the storage client unit 110 and a standard application programming interface, STA-API, linking a second distributed database 40 of said distributed database system 20 to the storage client unit 110. The received task 51 comprises a maintenance operation type and a maintenance operation type dependent maintenance information

In a further step S2, a maintenance operation according to the operation type dependent maintenance information is performed in the first database 30 of said distributed database system 20 on the basis of the maintenance operation type.

In an alternative embodiment, a maintenance operation according to the operation type dependent maintenance information is performed in the first database 30 or in the first database 30 and the second distributed database 40 of said distributed database system 20 on the basis of the maintenance operation type.

In a further step S3 a reference is returned by the storage client unit 110 to the agent 50 depending on the performed maintenance operation. The returned reference is a reference to the maintenance information with the first database 30 of said distributed database system 20.

In an alternative embodiment, the method for processing maintenance information in a distributed database system comprises a further step S4 for storing by the storage client unit 110 the reference in the second distributed database of said distributed database system on the basis of the store operation.

In an alternative embodiment, the method for processing maintenance information in a distributed database system comprises a further step S5 for deleting by the storage driver client 110 the maintenance information in the first database 20 of said distributed database system 20 on the basis of the remove operation.

In an alternative embodiment, the method for processing maintenance information in a distributed database system comprises a further step S6 for updating by the storage client unit the maintenance information in the first database of said distributed database system by encapsulating the reference for the maintenance information previously stored with an updated maintenance information on the basis of the update operation.

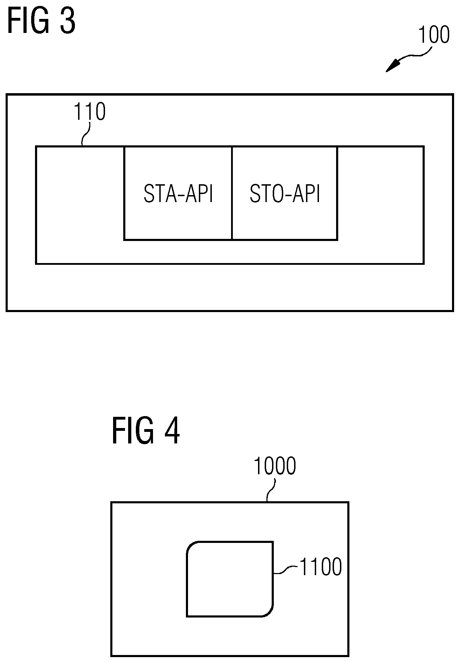

Fig. 3 shows a block diagram of a possible exemplary embodiment of a processing device 100 for processing maintenance information in a distributed database system 20.

As can be seen from the block diagram of Fig. 3, the processing device 100 according to an embodiment of the second aspect of the present invention is used for processing maintenance information in a distributed database system 20. The processing device 100 comprises in the illustrated embodiment a storage client unit 110. The storage client unit 110 consists of a storage application programming interface STO-API linking the first database 30 of the distributed database system 20 to the storage client unit 110 and a standard application programming interface linking the second distributed database 40 of the distributed database system 20 to the storage client unit 110.

The storage client unit 110 is configured to receive a task 51 from an agent 50. The received task 51 comprises a maintenance operation type and a maintenance operation type dependent maintenance information. The storage client unit 110 is further configured to perform a maintenance operation according to the operation type dependent maintenance information in the first database 30 or in the first database and the second distributed database 40.

The storage client unit 110 is further configured to return a reference to the agent 50 depending on the performed maintenance operation. The returned reference is a reference to the maintenance information within the first database 30 of said distributed database system 20.

The processing device 100 can be implemented as a computer. Computers comprise, for instance, personal computers, servers, programmable logic controllers (PLCs), handheld computer systems, pocket PC devices, mobile communication devices and other communication devices capable of processing data by computer, processors and other electronic data processing devices. Furthermore, the processing device 100 may be implemented in a cloud architecture.

Fig. 4 shows a block diagram of a possible exemplary embodiment of a non-transitory computer-readable medium 1000. The non-transitory computer-readable medium 1000 is provided with instructions that, when executed, cause a processing device 100 to execute the method 10 of the present invention.

The method and processing device can be used, for instance, in an access system for a company site using access cards, respectively identity cards that allows employees to enter the company site. On the access cards are, for instance, a reference number as well as personal data stored. To increase the security of the access system and to prevent misuse of the access cards, the access cards may be registered in a distributed database 40. According to the regulations of the DSGVO, personal data must be stored removeable, to be able to remove the personal data from the database after an employee may be leaves the company. The present invention fulfils the DSGVO regulations by bypassing the blockchain technology specific barriers. Data securely stored by using a blockchain are removeable as well as updateable.

In summary, the invention relates to a computer implemented method 10 and a processing device 100 for processing maintenance information in a distributed database system 20. In a first step S1 a task 51 from an agent 50 is received by a storage client unit 110, wherein the received task 51 comprises a maintenance operation type and a maintenance operation type dependent maintenance information. The client unit 110 comprises a storage application programming interface STO-API, linking a first database 30 of said distributed database system 20 to the storage client unit 110 and a standard application programming interface STA-API, linking a second distributed database 40 of said distributed database system 20 to the storage client unit 110. In a further step S2 a maintenance operation according to the operation type dependent maintenance information is at least performed in the first database 30 or in at least the first database and the second distributed database 40 of said distributed database system 20 on the basis of the maintenance operation type. In a further step S3 a reference is returned by the storage client unit 110 to the agent 50 depending on the performed maintenance operation. The returned reference is a reference to the maintenance information within the first database 30 of said distributed database system 20.

Due to the present invention, blockchain solutions can be used for scenarios where data deleting and altering functionality is required.

## Claims

1. A computer implemented method (10) for processing maintenance information in a distributed database system (20), the method comprising the steps of:
Receiving (S1) by a storage client unit (110) a task from an agent (50), the storage client unit (110) comprising a storage application programming interface, STO-API, linking a first database (30) of said distributed database system (20) to the storage client unit (110) and a standard application programming interface, STA-API, linking a second distributed database (40) of said distributed database system (20) to the storage client unit (110), wherein the received task comprises a maintenance operation type and a maintenance operation type dependent maintenance information;
Performing (S2) a maintenance operation according to the operation type dependent maintenance information in the first database (30) or in the first database (30) and the second distributed database (40) of said distributed database system (20) on the basis of the maintenance operation type;
Returning (S3) by the storage client unit (110) a reference to the agent (50) depending on the performed maintenance operation, wherein the returned reference is a reference to the maintenance information within the first database (30) of said distributed database system (20).

2. The method according to claim 1, wherein the method further comprises the step of:
Storing (S4) by the storage client unit (110) the reference in the second distributed database (40) of said distributed database system (20) on the basis of the store operation.

3. The method according to claims 1 or 2, wherein the second distributed database (40)
- is a blockchain and comprises data blocks, and wherein the data blocks are interlinked with each other by a cryptographic hash function.

4. The method according to claim 3, wherein the data blocks are interlinked with each other by a cryptographic hash function.

5. The method according to any of the preceding claims 1 to 4, wherein the maintenance operation type indicated by the received task comprises at least one of:
- storing maintenance information in the first database (30) and or storing maintenance information in the first database (30) and in the second distributed database (40);
- removing maintenance information from the first database (30), and/or
- updating maintenance information in the first database (30) of said distributed database system (20).

6. The method according to any of the preceding claims 1 and 5, wherein the maintenance operation comprises at least one of:
- a store operation to store the maintenance information in the first database (30) by the STO-API and the reference in the second distributed database (40) by the STA-API of the store client unit (100) or store maintenance information in the first database (30) by the STO-API and maintenance information and the reference in the second distributed database by the STA-API of the storage client unit (110);
- a remove operation to remove maintenance information within the first database (30); and/or
- an update operation to replace a maintenance information stored in the first database (30) by encapsulating the reference for the maintenance information previously stored with an updated maintenance information.

7. The method according to claim 6, wherein the remove operation invalidates the reference of the maintenance information in the first data base (30) so that the reference stored in the second distributed database (40) points to a removed maintenance information.

8. The method according to any of the preceding claims 6 and 7, wherein the method further comprises the step of:
Deleting (S5) by the storage client unit (110) the maintenance information in the first database (40) of said distributed database system (20) on the basis of the remove operation.

9. A processing device (100) for processing maintenance information in a distributed database system, comprises:
a storage client unit (110) configured to receive a task from an agent (50), the storage client unit (110) comprising a storage application programming interface, STO-API, linking a first database (30) of said distributed database system (20) to the storage client unit (110) and a standard application programming unit, STA-API, linking a second distributed database (40) of said distributed database system (20) to the storage client unit (110), wherein the received task comprises a maintenance operation type and a maintenance operation type dependent maintenance information;
wherein the storage client unit (110) is further configured to perform a maintenance operation according to the operation type dependent maintenance information in at least the first database (30) or in at least the first database (30) and the second distributed database (40) of said distributed database system (20) on the basis of the maintenance operation type; and
wherein the storage client unit (110) is further configured to return a reference to the agent (50) depending on the performed maintenance operation, wherein the returned reference is a reference to the maintenance information within the first database (30) of said distributed database system (20).

10. The processing device according to claims 9, wherein the storage client unit (110) is further configured to:
Store the reference in the second distributed database (40) of said distributed database system (20) on the basis of the store operation.

11. The processing device according to claims 9 or 10, wherein the second distributed database (40)
- is a blockchain and comprises data blocks, and wherein the data blocks are interlinked with each other by a cryptographic hash function.

12. The processing device according to any of the preceding claims 9 to 11, wherein the maintenance operation type indicated by the received task comprises at least one of:
- storing maintenance information in the first database (30) or storing maintenance information in the first database (30) and in the second distributed database (40);
- removing maintenance information from the first database (30), and/or
- updating maintenance information in the first database (30) of said distributed database system (20).

13. The processing device according to any of the preceding claims 9 and 12, wherein the maintenance operation comprises at least one of:
- a store operation to store the maintenance information in the first database (30) by the STO-API and/or in the second distributed database by the STA-API of the storage client unit (110);
- a remove operation to remove maintenance information within the first database (30); and/or
- an update operation to replace a maintenance information stored in the first database (30) by encapsulating the reference for the maintenance information previously stored with an updated maintenance information.

14. The processing device according to claim 13, wherein the remove operation invalidates the reference of the maintenance information in the first data base (30) so that the reference stored in the second distributed database (40) points to a removed maintenance information.

15. A non-transitory computer-readable medium (1000) comprises executable instructions that, when executed, cause a processing device (100) to:
receive by a storage client unit (110) a task from an agent (50), the storage client unit (110) comprising a storage application programming interface, STO-API, linking a first database (30) of said distributed database system (20) to the storage client unit (110) and a standard application programming interface, STA-API, linking a second distributed database (40) of said distributed database system (20) to the storage client unit (110), wherein the received task comprises a maintenance operation type and a maintenance operation type dependent maintenance information;
perform a maintenance operation according to the operation type dependent maintenance information in the first database (30) or in the first database (30) and the second distributed database (40) of said distributed database system (20) on the basis of the maintenance operation type;
return by the storage client unit (110) a reference to the agent (50) depending on the performed maintenance operation, wherein the returned reference is a reference to the maintenance information within the first database (30) of said distributed database system (20).

## Amended claims

### Amended claims in accordance with Rule 137(2) EPC.

1. A computer implemented method (10) for processing maintenance information in a distributed database system (20), the method comprising the steps of:
Receiving (S1) by a storage client unit (110) a task from an agent (50), the storage client unit (110) comprising a storage application programming interface, STO-API, linking a first database (30) of said distributed database system (20) to the storage client unit (110) and a standard application programming interface, STA-API, linking a second distributed database (40) of said distributed database system (20) to the storage client unit (110), wherein the received task comprises a maintenance operation type and a maintenance operation type dependent maintenance information;
Performing (S2) a maintenance operation according to the operation type dependent maintenance information in the first database (30) or in the first database (30) and the second distributed database (40) of said distributed database system (20) on the basis of the maintenance operation type;
Returning (S3) by the storage client unit (110) a reference to the agent (50) depending on the performed maintenance operation, wherein the returned reference is a reference to the maintenance information within the first database (30) of said distributed database system (20);
Storing (S4) by the storage client unit (110) the reference in the second distributed database (40) of said distributed database system (20) on the basis of the store operation; and
wherein the second distributed database (40)
- is a blockchain and comprises data blocks, and wherein the data blocks are interlinked with each other by a cryptographic hash function, and
wherein the maintenance operation type indicated by the received task comprises at least one of:
- storing maintenance operation type dependent maintenance information in the first database (30) and storing maintenance information in the first database (30) and in the second distributed database (40);
- removing maintenance operation type dependent maintenance information from the first database (30), and
- updating maintenance operation type dependent maintenance information in the first database (30) of said distributed database system (20), and
wherein the maintenance operation comprises at least one of:
- a store operation to store the maintenance information in the first database (30) by the STO-API and the reference in the second distributed database (40) by the STA-API of the store client unit (100) and store maintenance information in the first database (30) by the STO-API and maintenance information and the reference in the second distributed database by the STA-API of the storage client unit (110);
- a remove operation to remove maintenance information within the first database (30); and
- an update operation to replace a maintenance information stored in the first database (30) by encapsulating the reference for the maintenance information previously stored with an updated maintenance information.

2. The method according to claim 1, wherein the remove operation invalidates the reference of the maintenance information in the first data base (30) so that the reference stored in the second distributed database (40) points to a removed maintenance information.

3. The method according to any of the preceding claims 1 and 2, wherein the method further comprises the step of:
Deleting (S5) by the storage client unit (110) the maintenance information in the first database (40) of said distributed database system (20) on the basis of the remove operation.

4. A processing device (100) for processing maintenance information in a distributed database system, comprises:
a storage client unit (110) configured to receive a task from an agent (50), the storage client unit (110) comprising a storage application programming interface, STO-API, linking a first database (30) of said distributed database system (20) to the storage client unit (110) and a standard application programming unit, STA-API, linking a second distributed database (40) of said distributed database system (20) to the storage client unit (110), wherein the received task comprises a maintenance operation type and a maintenance operation type dependent maintenance information;
wherein the storage client unit (110) is further configured to perform a maintenance operation according to the operation type dependent maintenance information in at least the first database (30) or in at least the first database (30) and the second distributed database (40) of said distributed database system (20) on the basis of the maintenance operation type;
wherein the storage client unit (110) is further configured to return a reference to the agent (50) depending on the performed maintenance operation, wherein the returned reference is a reference to the maintenance information within the first database (30) of said distributed database system (20); and
wherein the storage client unit (110) is further configured to:
Store the reference in the second distributed database (40) of said distributed database system (20) on the basis of the store operation, and
wherein the second distributed database (40)
- is a blockchain and comprises data blocks, and wherein
the data blocks are interlinked with each other by a cryptographic hash function, and
wherein the maintenance operation type indicated by the received task comprises at least one of:
- storing maintenance operation type dependent maintenance information in the first database (30) or storing maintenance information in the first database (30) and in the second distributed database (40);
- removing maintenance operation type dependent maintenance information from the first database (30), and
- updating maintenance operation type dependent maintenance information in the first database (30) of said distributed database system (20), and
wherein the maintenance operation comprises at least one of:
- a store operation to store the maintenance information in the first database (30) by the STO-API and/or in the second distributed database by the STA-API of the storage client unit (110);
- a remove operation to remove maintenance information within the first database (30); and
- an update operation to replace a maintenance information stored in the first database (30) by encapsulating the reference for the maintenance information previously stored with an updated maintenance information.

5. The processing device according to claim 4, wherein the remove operation invalidates the reference of the maintenance information in the first data base (30) so that the reference stored in the second distributed database (40) points to a removed maintenance information.

6. A non-transitory computer-readable medium (1000) comprises executable instructions that, when executed, cause a processing device (100) to perform a method according to any of preceding method claims.
